# EUROPÄISCHE PATENTSCHRIFT

(11) **EP 3 610 151 B1**
(45) Veröffentlichungstag und Bekanntmachung des Hinweises auf die Patenterteilung: **01.07.2020**
(21) Anmeldenummer: 18715013.1
(22) Anmeldetag: 29.03.2018
(51) Int. Cl.: F03B 13/06, H02J 3/28, H02J 3/48, H02J 3/38

(54) **VERFAHREN ZUM BETRIEB EINER WASSERKRAFTANLAGE ZUR REGELUNG DER NETZFREQUENZ**
METHOD OF OPERATION OF A HYDROELECTRIC POWER PLANT FOR REGULATING NETWORK FREQUENCY
PROCÉDÉ DE FONCTIONNEMENT D'UNE INSTALLATION HYDROÉLECTRIQUE POUR LA RÉGULATION DE LA FRÉQUENCE DU RÉSEAU

(30) Priorität: 13.04.2017 DE 102017107992; 10.08.2017 DE 102017118194
(43) Veröffentlichungstag der Anmeldung: 19.02.2020
(73) Patentinhaber: Voith Patent GmbH, 89522 Heidenheim (DE)
(72) Erfinder: FOITZIK, Thomas, 73491 Neuler (DE); BRUNS, Martin, 89518 Heidenheim (DE)
(74) Vertreter: Voith Patent GmbH - Patentabteilung
(86) Internationale Anmeldenummer: PCT/EP2018/058121
(87) Internationale Veröffentlichungsnummer: WO 2018/188965

(56) Entgegenhaltungen:
- EP-A2- 2 270 331
- EP-A2- 2 369 169
- DE-A1- 2 421 409
- DE-A1-102011 015 336
- US-A1- 2012 169 057

## Beschreibung

Die vorliegende Erfindung betrifft eine Wasserkraftanlage, welche zur schnellen Regelung der Netzfrequenz geeignet ist, und ein Verfahren zum Betrieb einer solchen Wasserkraftanlage.

Die EP 2 369 169 A2 offenbart eine Wasserkraftanlage, umfassend ein Oberwasserbecken und ein Unterwasserbecken, wobei der Wasserspiegel im Oberwasserbecken über dem Wasserspiegel des Unterwasserbeckens liegt, einen Wasserweg, der das Oberwasserbecken mit dem Unterwasserbecken verbindet, eine Turbine, welche im Wasserweg angeordnet ist, eine elektrische Asynchronmaschine, welche mit der Turbine mechanisch verbunden ist und einen Rotor und einen Stator umfasst, einen Frequenzumrichter, welcher mit der Asynchronmaschine elektrisch verbunden ist, einen Netz-Transformator, welcher mit dem Frequenzumrichter, dem Stator der Asynchronmaschine und dem Stromnetz elektrisch verbunden ist, und einen Widerstand, welcher im Gleichstromzwischenkreis des Frequenzumrichters so angeordnet ist, dass er die Stränge des Gleichstromzwischenkreises miteinander verbinden kann.

Klassische Wasserkraftanlagen können aufgrund der Trägheit der Wassersäule, sowie des maximalen und minimalen zulässigen Wasserdruckes in den Wasserwegen und in der Turbine, die elektrische Leistung nur verhältnismäßig langsam regeln - typischerweise auf einer Zeitskala von 10 - 30 Sekunden. Dies reicht nicht aus um bei den gestiegenen Anforderungen einen Beitrag zur kurzzeitigen Regelung der Netzfrequenz leisten zu können. So fordert beispielsweise der National Grid Code von Großbritannien, dass eine bestimmte elektrische Leistung in Abhängigkeit von der Netzfrequenz in weniger als einer Sekunde ins Netz einzuprägen bzw. zu absorbieren ist, um an der entsprechenden Vergütung zu partizipieren. Es ist Aufgabe der vorliegenden Erfindung eine Wasserkraftanlage anzugeben, die Regelleistung auf einer Zeitskala von unter einer Sekunde bereitstellen kann. Ferner ist es Aufgabe der vorliegenden Erfindung, ein Verfahren zum Betrieb einer solchen Wasserkraftanlage anzugeben.

Die Erfinder haben erkannt, dass die gestellte Aufgabe durch ein Verfahren zum Betrieb einer Wasserkraftanlage mit den Merkmalen des Anspruchs 1 gelöst werden kann. Vorteilhafte Ausführungsformen ergeben sich aus abhängigen Verfahrensansprüchen.

Die erfindungsgemäße Lösung wird nachfolgend anhand von Figuren erläutert. Darin ist im Einzelnen folgendes dargestellt:
- Figur 1: Wasserkraftanlage;
- Figur 2: Ablaufdiagramm des erfindungsgemäßen Verfahrens zum Betrieb einer Wasserkraftanlage.

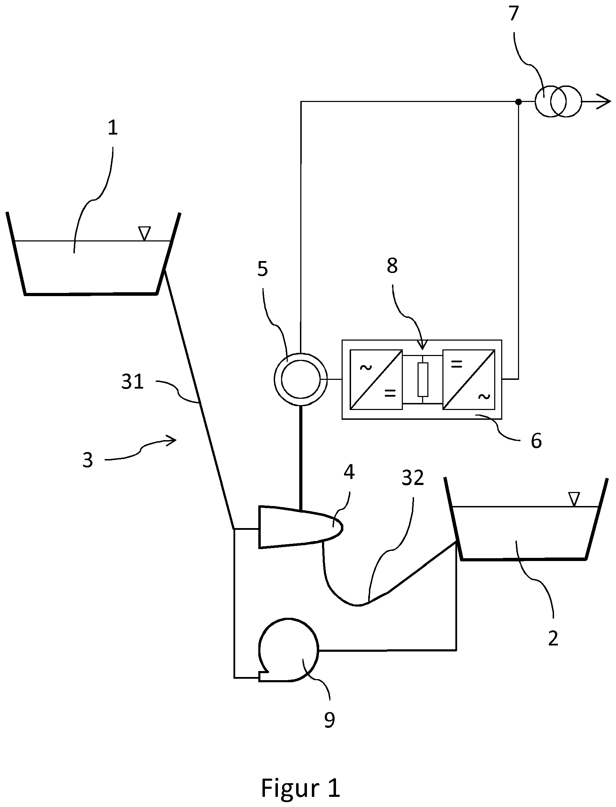

Figur 1 zeigt den schematischen Aufbau einer Wasserkraftanlage. Die Wasserkraftanlage umfasst ein Oberwasserbecken, welches mit 1 bezeichnet ist, und ein Unterwasserbecken, welches mit 2 bezeichnet ist, wobei der Wasserspiegel im Oberwasserbecken 1 über dem Wasserspiegel des Unterwasserbeckens 2 liegt. Bei den Becken 1 und 2 kann es sich auch um natürliche Gewässer wie beispielsweise Seen oder Flüsse handeln. Die Wasserkraftanlage umfasst ferner einen Wasserweg, welcher mit 3 bezeichnet ist und das Oberwasserbecken 1 mit dem Unterwasserbecken 2 verbindet. Im Wasserweg 3 ist eine Turbine angeordnet, welche mit 4 bezeichnet ist. Dadurch wird der Wasserweg 3 in zwei Teilstücke geteilt. Der oberhalb der Turbine 4 gelegene Teil - die Druckrohrleitung - ist mit 31 bezeichnet, und der unterhalb der Turbine gelegene Teil - das Saugrohr - ist mit 32 bezeichnet. Die Turbine 4 verfügt über ein Turbinenlaufrad, einen Leitapparat und eine Einrichtung zum Ausblasen des Raumes um das Turbinenlaufrades, so dass im ausgeblasenen Zustand das Turbinenlaufrad in Luft rotieren kann, wobei der geschlossene Leitapparat ein Entweichen der Luft in Richtung Oberwasser verhindert. Die Turbine kann optional noch über weitere Schließorgane neben dem Leitapparat verfügen, wie z.B. einen Kugelschieber. Die Turbine 4 ist an eine doppelt gespeiste Asynchronmaschine gekoppelt, welche mit 5 bezeichnet ist. Die doppelt gespeiste Asynchronmaschine 5 umfasst einen Rotor und einen Stator. Der Rotor der doppelt gespeisten Asynchronmaschine 5 ist elektrisch mit einem Frequenzumrichter verbunden, welcher mit 6 bezeichnet ist. Der Frequenzumrichter 6 ist mittels eines Netz-Transformators, welcher mit 7 bezeichnet ist, mit dem Stromnetz verbunden. Der Stator der doppelt gespeisten Asynchronmaschine ist direkt mit dem Transformator 7 verbunden.

Im Gleichstromzwischenkreis des Frequenzumrichters 6 befindet sich ein Widerstand, welcher so geschaltet werden kann, dass er die Stränge des Gleichstromzwischenkreises miteinander verbindet. Der Widerstand ist mit 8 bezeichnet. Ferner umfasst die Wasserkraftanlage optional wenigstens eine Pumpe, welche mit 9 bezeichnet und so angeordnet ist, dass sie Wasser aus dem Unterwasserbecken 2 in das Oberwasserbecken 1 fördern kann. Die Pumpe 9 kann eigene Schließorgane umfassen und besitzt einen eigenständigen Antrieb mit Netzanschluss.

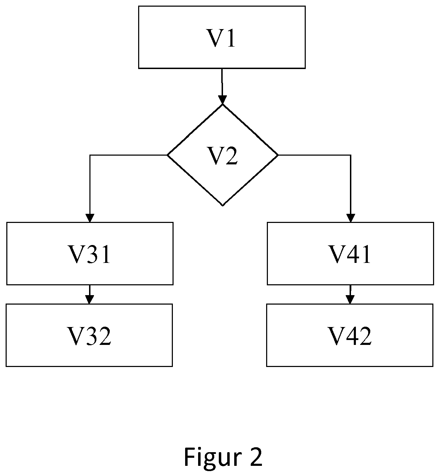

Figur 2 zeigt schematisch den Ablauf des erfindungsgemäßen Verfahrens zum Betrieb einer Wasserkraftanlage. Im Schritt, der mit V1 bezeichnet ist, befindet sich die Wasserkraftanlage in folgendem Zustand: Das Laufrad der Turbine 4 ist ausgeblasen, so dass sich dasselbe in Luft drehen kann. Die doppelt gespeiste Asynchronmaschine 5 läuft im sogenannten Phasenschieber-Betrieb, d.h. der Läufer derselben dreht sich gemäß der Netzfrequenz (d.h. innerhalb des zulässigen Schlupfbandes) und je nach Erregungszustand kann Blindleistung kapazitiv oder induktiv ans Netz abgegeben werden. Durch die Kopplung von doppelt gespeister Asynchronmaschine 5 und Turbine 4 dreht sich das Laufrad der Turbine 4 mit derselben Rotationsgeschwindigkeit wie der Rotor der doppelt gespeisten Asynchronmaschine 5. Im Schritt, der mit V2 bezeichnet ist, ergeht an die Wasserkraftanlage die Aufforderung, schnelle Regelleistung aktiv zur Verfügung zu stellen. Die Aufforderung kann dahin gehen, Leistung schnell ans Netz abzugeben oder Leistung schnell vom Netz aufzunehmen. Im ersten Fall werden die Schritte des linken Astes des Ablaufdiagramms durchlaufen, im zweiten Fall die Schritte des rechten Astes.

Leistungsabgabe an das Netz: Im mit V31 bezeichneten Schritt wird über den Frequenzumrichter 6 die doppelt gespeiste Asynchronmaschine 5 und die verbundene Turbine 4 abgebremst. Dabei wird die im Drehimpuls der rotierenden Komponenten gespeicherte Energie an das Netz abgegeben. Die in Schritt V31 ablaufenden Vorgänge sind sehr schnell und daher kann unterhalb von einer Sekunde die angeforderte Leistung ans Netz abgeben werden. Im mit V32 bezeichneten Schritt wird der Leitapparat und ggf. weitere Schließorgane der Turbine 4 geöffnet. Dadurch kann Wasser in den zuvor ausgeblasenen Bereich um das Laufrad der Turbine 4 vom Oberwasser 1 her gelangen. Die Luft wird in Richtung Unterwasser 2 ausgetrieben. Durch den Wasserfluss wird die Turbine 4 und die doppelt gespeiste Asynchronmaschine 5 wieder auf eine höhere Drehzahl beschleunigt und so kann dauerhaft Leistung ans Netz abgegeben werden. Die Vorgänge von Schritt V32 werden simultan mit den Vorgängen von Schritt V31 initiiert. Da die Vorgänge von Schritt V32 jedoch viel langsamer ablaufen als die Vorgänge von Schritt V31, kommen diese erst viel später zum Tragen - in der Regel erst nach ca. 15-20 Sekunden. Davor wird die Leistungsabgabe an das Netz durch die Vorgänge von Schritt V31 bestimmt. Im Schritt V31 wird die Leistungsabgabe an das Netz durch den Frequenzumrichter 6 geregelt und im Schritt V32 durch den Regler der Turbine 4 mit Hilfe des Leitapparats.

Leistungsaufnahme vom Netz: Im mit V41 bezeichneten Schritt zieht der Frequenzumrichter 6 Leistung aus dem Netz. Diese Leistung wird mit Hilfe des Widerstandes 8 in Wärme umgewandelt. Dazu muss der Widerstand 8 gekühlt werden. Es ist von Vorteil, wenn ein Teil der Leistung, die der Frequenzumrichter 6 aus dem Netz zieht, dazu verwendet wird, um die doppelt gespeiste Asynchronmaschine 5 und das Laufrad der Turbine 4 zu beschleunigen. So muss weniger Energie im Widerstand 8 in Wärme umgewandelt werden. Die in Schritt V41 ablaufenden Vorgänge sind sehr schnell und daher kann unterhalb von einer Sekunde die angeforderte Leistung aus dem Netz absorbiert werden. Im Prinzip kann mit den in Schritt V41 beschriebenen Vorgängen allein auch über einen längeren Zeitraum Leistung aus dem Netz aufgenommen werden. Allerdings wird dabei ständig Energie in Wärme umgewandelt und somit sozusagen vernichtet. Es ist daher von Vorteil, wenn die Energie in V41 nur kurzzeitig in Wärme umgewandelt wird. Dazu wird im optionalen Schritt, welcher mit V42 bezeichnet ist, die optionale Pumpe 9 hochgefahren, um Wasser aus dem Unterwasserbecken 2 ins Oberwasserbecken 1 zu pumpen. Dadurch wird weiter Leistung aus dem Netz absorbiert, und die so von der Pumpe 9 aufgenommene Energie wird in Lageenergie des Wassers umgewandelt und zur späteren Verwendung im Turbinenbetrieb gespeichert. Die Vorgänge von Schritt V42 werden dabei simultan mit den Vorgängen von Schritt V41 initiiert. Da die Vorgänge von Schritt V42 jedoch viel langsamer ablaufen als die Vorgänge von Schritt V41, kommen diese erst viel später zum Tragen - in der Regel erst nach ca. 10 bis 15 Sekunden. Davor wird die Leistungsaufnahme aus dem Netz durch die Vorgänge von Schritt V41 bestimmt. Im Schritt V41 wird die Leistungsaufnahme aus dem Netz durch den Frequenzumrichter 6 geregelt. Im Schritt V42 kann die Leistungsaufnahme aus dem Netz auf zweierlei Weise geregelt werden: Entweder verfügt die Pumpe 9 über einen drehzahlvariablen Antrieb, der dadurch die von der Pumpe 9 aufgenommene Leistung regeln kann, oder die Pumpe 9 ist als Pumpe mit konstanter Drehzahl ausgebildet. Im letzteren Fall übernimmt der Frequenzumrichter 6 die Regelung der aus dem Netz aufgenommenen Leistung. Der Leitapparat der Turbine 4 wird zur Drehzahlregelung eingesetzt. Dabei produziert die doppelt gespeiste Asynchronmaschine 5 eine entsprechende elektrische Leistung, die ins Netz eingespeist wird. Es ergibt sich eine Situation, die unter dem Namen hydraulischer Kurzschluss bekannt ist. Die aus dem Netz aufgenommen Netto-Leistung ergibt sich dann aus der Pumpenleistung minus der von der doppelt gespeisten Asynchronmaschine 5 produzierten Leistung. Es ist klar, dass die von der doppelt gespeisten Asynchronmaschine 5 erzeugte Leistung dabei geringer sein muss als die Pumpenleistung. Da die Turbinenleistung und damit die von der doppelt gespeisten Asynchronmaschine 5 erzeugte Leistung durch den Frequenzumrichter 6 geregelt werden kann, kann somit auch die Netto-Leistungsaufnahme aus dem Netz geregelt werden.

Nach Abarbeitung der im Schritt V2 ergangenen Aufforderung zur Bereitstellung von schneller Regelleistung, wird die Wasserkraftanlage wieder in den unter Schritt V1 beschriebenen Betriebszustand versetzt. Dann ist die Wasserkraftanlage wieder bereit eine weitere Aufforderung zu bedienen.

Die konkrete Auslegung einer erfindungsgemäßen Wasserkraftanlage hat ergeben, dass es vorteilhaft ist, wenn im Schritt V31 die doppelt gespeiste Asynchronmaschine 5 auf die minimal zulässige Drehzahl abgebremst wird. Ebenso ist es vorteilhaft, wenn im Schritt V41 die doppelt gespeiste Asynchronmaschine 5 auf die maximal zulässige Drehzahl beschleunigt wird. Der Frequenzumrichter 6 kann als sogenannter "Voltage Source Inverter" (VSI) ausgebildet sein. Der VSI hat den Vorteil, dass er eine Leistungsfaktor-Regelung und eine Regelung im sogenannten "Low Voltage Ride Through" ermöglicht.

Damit die vom Grid Code geforderte Regelleistung durch die Wasserkraftanlage optimal zur Verfügung gestellt werden kann, muss die Anlage so ausgelegt sein, dass die Kapazität zur Leistungsabgabe an das Netz der Kapazität der Leistungsaufnahme aus dem Netz entspricht. Diese Anforderung muss sowohl im Kurzzeitbereich als auch im Langzeitbereich erfüllt sein. Die erfindungsgemäße Wasserkraftanlage ist durch ihren Aufbau so flexibel, dass diese Anforderung durch eine entsprechende Auslegung der Komponenten erfüllt werden kann.

## Patentansprüche

1. Verfahren zum Betrieb einer Wasserkraftanlage mit einem Oberwasserbecken (1), einem Unterwasserbecken (2), wobei der Wasserspiegel im Oberwasserbecken (1) über dem Wasserspiegel des Unterwasserbeckens (2) liegt, einem Wasserweg (3), der das Oberwasserbecken (1) mit dem Unterwasserbecken (2) verbindet, einer Turbine (4), welche im Wasserweg (3) angeordnet ist und ein Laufrad umfasst, einer elektrische Asynchronmaschine (5), welche mit der Turbine (4) mechanisch verbunden ist und einen Rotor und einen Stator umfasst, einem Frequenzumrichter (6), welcher mit der Asynchronmaschine elektrisch verbunden ist, einem Netz-Transformator (7) welcher mit dem Frequenzumrichter (6), dem Stator der doppelt gespeisten Asynchronmaschine (5) und dem Stromnetz elektrisch verbunden ist, und einem Widerstand (8) welcher im Gleichstromzwischenkreis des Frequenzumrichters (6) so angeordnet ist, dass er die Stränge des Gleichstromzwischenkreises miteinander verbinden kann, **dadurch gekennzeichnet, dass** die Turbine einen Leitapparat und eine Einrichtung zum Ausblasen des Laufradraumes umfasst, die Asynchronmaschine doppelt gespeist ausgeführt ist, der Frequenzumrichter mit dem Rotor der Asynchronmaschine verbunden ist, und die Wasserkraftanlage eine Einrichtung zur Kühlung des Widerstandes (8) umfasst,
umfassend die folgenden Schritte:
V1: Das Laufrad der Turbine (4) ist ausgeblasen und die doppelt gespeiste Asynchronmaschine (5) läuft im Phasenschieber-Betrieb;
V2: Empfang einer Aufforderung an die Wasserkraftanlage, schnelle Regelleistung zur Verfügung zu stellen;
Bei Aufforderung zur Leistungsabgabe:
V31: Bremsen der doppelt gespeisten Asynchronmaschine (5) durch den Frequenzumrichter (6);
V32: Öffnen der Leitschaufeln der Turbine (4) und Start des geregelten Turbinenbetriebs;
Bei Aufforderung zur Leistungsaufnahme:
V41: Aufnahme von Energie aus dem Netz durch den Frequenzumrichter (6) und Umwandlung der Energie in Wärme durch den Widerstand (8);

2. Verfahren nach Anspruch 6 1, wobei die Wasserkraftanlage eine Pumpe (9) umfasst, welche so angeordnet ist, dass sie Wasser aus dem Unterwasserbecken (2) in das Oberwasserbecken (1) fördern kann, wobei die Pumpe (9) einen eigenständigen Antrieb umfasst, und wobei das Verfahren bei Aufforderung zur Leistungsaufnahme den folgenden zusätzlichen Schritt umfasst:
V42: Anfahren der Pumpe (9) und Start des geregelten Pumpenbetriebs;

3. Verfahren nach einem der Ansprüche 1 bis 2, wobei die doppelt gespeiste Asynchronmaschine (5) im Schritt V41 durch den Frequenzumrichter (6) beschleunigt wird.

4. Verfahren nach einem der Ansprüche 1 bis 3, wobei die doppelt gespeiste Asynchronmaschine (5) im Schritt V31 auf die minimal zulässige Drehzahl abgebremst wird.

5. Verfahren nach einem der Ansprüche 1, 2 oder 4, wobei die doppelt gespeiste Asynchronmaschine (5) im Schritt V41 auf die maximal zulässige Drehzahl beschleunigt wird.

6. Verfahren nach einem der Ansprüche 1 bis 5 in Verbindung mit Anspruch 2, wobei die Pumpe (9) einen drehzahlvariablen Antrieb umfasst, und wobei der geregelte Pumpenbetrieb in Schritt V42 durch den drehzahlvariablen Pumpenantrieb geregelt wird.

7. Verfahren nach einem der Ansprüche 1 bis 5 in Verbindung mit Anspruch 2, wobei die Pumpe (9) einen Antrieb mit konstanter Drehzahl umfasst, und wobei im Schritt V42 der Leitapparat der Turbine (4) geöffnet wird und der geregelte Pumpenbetrieb in Schritt V42 durch den Frequenzumrichter (6) und den Leitapparat der Turbine (4) geregelt wird, wobei sich die Turbine (4) und die Pumpe (9) im hydraulischen Kurzschluss befinden.

8. Verfahren nach einem der Ansprüche 1 bis 7, wobei der Frequenzumrichter (6) als sogenannter "Voltage Source Inverter" ausgebildet ist.

## Claims

1. Method for operating a hydroelectric power plant having an upper water tank (1), a lower water tank (2), wherein the water level in the upper water tank (1) is above the water level of the lower water tank (2), a waterway (3) that connects the upper water tank (1) to the lower water tank (2), a turbine (4) that is arranged in the waterway (3) and comprises an impeller, an asynchronous electrical machine (5) that is mechanically connected to the turbine (4) and comprises a rotor and a stator, a frequency converter (6) that is electrically connected to the asynchronous machine, a grid transformer (7) that is connected to the frequency converter (6), the stator of the dual-fed asynchronous machine (5) and the power grid, and a resistor (8) that is arranged in the DC current intermediate circuit of the frequency converter (6) such that it is able to connect the strands of the DC current intermediate circuit to one another, **characterized in that** the turbine comprises a guide apparatus and a device for exhausting the impeller space, the asynchronous machine is designed to be dual-fed, the frequency converter is connected to the rotor of the asynchronous machine, and the hydroelectric power plant has a device for cooling the resistor (8),
comprising the following steps:
V1: The impeller of the turbine (4) is exhausted and the dual-fed asynchronous machine (5) operates in phase-shifter operation;
V2: Receiving a request to the hydroelectric power plant to provide rapid control power;
In the case of a request to output power:
V31: Braking the dual-fed asynchronous machine (5) using the frequency converter (6);
V32: Opening the guide vanes of the turbine (4) and starting controlled turbine operation;
In the case of a request to consume power:
V41: Consuming energy from the gird using the frequency converter (6) and converting the energy into heat using the resistor (8).

2. Method according to Claim 1, wherein the hydroelectric power plant comprises a pump (9) that is arranged such that it is able to convey water from the lower water tank (2) to the upper water tank (1), wherein the pump (9) comprises a standalone drive, and wherein the method, in the case of a request to consume power, comprises the following additional step:
V42: Starting up the pump (9) and starting controlled pump operation.

3. Method according to either of Claims 1 and 2, wherein the dual-fed asynchronous machine (5) is accelerated by the frequency converter (6) in step V41.

4. Method according to one of Claims 1 to 3, wherein the dual-fed asynchronous machine (5) is braked to the minimum permissible rotational speed in step V31.

5. Method according to one of Claims 1, 2 or 4, wherein the dual-fed asynchronous machine (5) is accelerated to the maximum permissible rotational speed in step V41.

6. Method according to one of Claims 1 to 5 in connection with Claim 2, wherein the pump (9) comprises a drive with variable rotational speed, and wherein the controlled pump operation is controlled by the pump drive with variable rotational speed in step V42.

7. Method according to one of Claims 1 to 5 in connection with Claim 2, wherein the pump (9) comprises a drive with constant rotational speed, and wherein the guide apparatus of the turbine (4) is opened in step V42 and the controlled pump operation is controlled by the frequency converter (6) and the guide apparatus of the turbine (4) in step V42, wherein the turbine (4) and the pump (9) are hydraulically short-circuited.

8. Method according to one of Claims 1 to 7, wherein the frequency converter (6) is designed as what is called a voltage source inverter.

## Revendications

1. Procédé pour faire fonctionner une installation hydroélectrique comprenant un bassin d'eau supérieur (1), un bassin d'eau inférieur (2), le niveau d'eau dans le bassin d'eau supérieur (1) se trouvant au-dessus du niveau d'eau dans le bassin d'eau inférieur (2), une voie d'eau (3) qui relie le bassin d'eau supérieur (1) avec le bassin d'eau inférieur (2), une turbine (4) qui est disposée dans la voie d'eau (3) et qui comporte une roue à aubes, une machine asynchrone (5) électrique qui est reliée mécaniquement à la turbine (4) et qui comporte un rotor et un stator, un convertisseur de fréquence (6) qui est relié électriquement à la machine asynchrone, un transformateur de réseau (7) qui est relié électriquement au convertisseur de fréquence (6), au stator de la machine asynchrone (5) à double alimentation et au réseau électrique, et une résistance (8) qui est disposée dans le circuit intermédiaire à courant continu du convertisseur de fréquence (6) de telle sorte qu'elle peut relier entre elles les branches du circuit intermédiaire à courant continu, **caractérisé en ce que** la turbine comporte un distributeur et un dispositif destiné à souffler l'espace de la roue à aubes, la machine asynchrone est réalisée à double alimentation, le convertisseur de fréquence est relié au rotor de la machine asynchrone, et l'installation hydroélectrique comporte un dispositif destiné à refroidir la résistance (8),
comprenant les étapes suivantes :
V1 : la roue à aubes de la turbine (4) est soufflée et la machine asynchrone (5) à double alimentation tourne en mode déphaseur ;
V2 : réception d'une demande adressée à l'installation hydroélectrique de mettre à disposition une puissance régulée rapide ;
lors d'une demande de délivrance de puissance :
V31 : freinage de la machine asynchrone (5) à double alimentation par le convertisseur de fréquence (6) ;
V32 : ouverture des aubes directrices de la turbine (4) et démarrage du fonctionnement régulé de la turbine ;
lors d'une demande d'absorption de puissance :
V41 : absorption d'énergie en provenance du réseau par le convertisseur de fréquence (6) et conversion de l'énergie en chaleur par la résistance (8).

2. Procédé selon la revendication 1, l'installation hydroélectrique comportant une pompe (9) qui est disposée de telle sorte qu'elle peut refouler l'eau du bassin d'eau inférieur (2) dans le bassin d'eau supérieur (1), la pompe (9) comportant un mécanisme d'entraînement autonome et le procédé comprenant les étapes supplémentaires suivantes lors d'une demande d'absorption de puissance :
V42 : démarrage de la pompe (9) et début du fonctionnement régulé de la pompe.

3. Procédé selon l'une des revendications 1 et 2, la machine asynchrone (5) à double alimentation, à l'étape V41, étant accélérée par le convertisseur de fréquence (6) .

4. Procédé selon l'une des revendications 1 à 3, la machine asynchrone (5) à double alimentation, à l'étape V31, étant freinée à la vitesse de rotation minimale admissible.

5. Procédé selon l'une des revendications 1, 2 ou 4, la machine asynchrone (5) à double alimentation, à l'étape V41, étant accélérée à la vitesse de rotation maximale admissible.

6. Procédé selon l'une des revendications 1 à 5 en association avec la revendication 2, la pompe (9) comportant un mécanisme d'entraînement à vitesse de rotation variable et le fonctionnement régulé de la pompe à l'étape V42 étant régulé par le mécanisme d'entraînement à vitesse de rotation variable de la pompe.

7. Procédé selon l'une des revendications 1 à 5 en association avec la revendication 2, la pompe (9) comportant un mécanisme d'entraînement à vitesse de rotation constante, et à l'étape V42 le distributeur de la turbine (4) étant ouvert et le fonctionnement régulé de la pompe à l'étape V42 étant régulé par le convertisseur de fréquence (6) et le distributeur de la turbine (4), la turbine (4) et la pompe (9) se trouvant en court-circuit hydraulique.

8. Procédé selon l'une des revendications 1 à 7, le convertisseur de fréquence (6) étant réalisé sous la forme d'un onduleur dit source de tension.
